# EUROPÄISCHE PATENTSCHRIFT

(11) **EP 4 487 674 B1**
(45) Veröffentlichungstag und Bekanntmachung des Hinweises auf die Patenterteilung: **28.01.2026**
(21) Anmeldenummer: 24178505.4
(22) Anmeldetag: 28.05.2024
(51) Int. Cl.: A01D 45/02, A01D 34/835

(54) **VORSATZGERÄT**
ATTACHMENT DEVICE
APPAREIL ADAPTABLE

(30) Priorität: 05.07.2023 DE 102023117725
(43) Veröffentlichungstag der Anmeldung: 08.01.2025
(73) Patentinhaber: CLAAS Selbstfahrende Erntemaschinen GmbH, 33428 Harsewinkel (DE)
(72) Erfinder: Varga-Dudas, Tibor Zsolt, 5600 Bekescsaba (HU)
(74) Vertreter: CLAAS Gruppe

(56) Entgegenhaltungen:
- EP-B1- 3 236 738
- DE-A1- 102015 116 375
- DE-A1- 19 852 695
- US-A- 5 680 750
- US-A1- 2014 230 392

## Beschreibung

Die vorliegende Erfindung betrifft ein Vorsatzgerät, für die Ernte von Halmfrüchten, typischerweise Mais, gemäß dem Oberbegriff des Anspruchs 1.

Derartige Vorsatzgeräte umfassen Pflückeinheiten mit einem zwischen Pflückplatten gebildeten Pflückspalt und paarweise unterhalb des Pflückspaltes angeordneten, gegenläufig angetriebenen Pflückwalzen. Unterhalb der Pflückeinheiten können Schneidbeziehungsweise Häckseleinrichtungen vorgesehen sein, die zumindest ein Messer aufweisen, welches um eine im Wesentlichen vertikal verlaufende Drehachse rotiert und dessen radiale Erstreckung in einer unterhalb der Pflückwalzen verlaufenden Ebene angeordnet ist.

Bei der Ernte von Körnermais wird ein Mähdrescher eingesetzt, in welchem die Maiskörner mittels eines Dreschwerkes aus dem Maiskolben ausgedroschen und anschließend in einer Körneraufbereitung von weiteren Verunreinigungen getrennt werden. Ein entsprechend eingesetzter Mähdrescher wird anstelle eines für eine Getreide- oder Rapsernte üblichen Schneidwerks mit einem Vorsatzgerät für die Maisernte versehen. Dieses Vorsatzgerät sorgt für einen kontrollierten Einzug der gesamten Maispflanze in der Pflückeinheit, in welcher die Maiskolben von den Maisstängeln entfernt und anschließend über einen Querförderer und einen Schrägförderer einem Dreschwerk des Mähdreschers zugeführt wird. Ein entsprechendes Vorsatzgerät weist je nach seiner Gesamtarbeitsbreite eine bestimmte Anzahl von Pflückeinheiten auf. Bei einem Erntevorgang wird der Halmgutstengel der Maispflanzen von einem Pflückwalzenpaar in Achsrichtung der Pflückwalzen und senkrecht dazu zwischen den Walzen hindurch gefördert. Hierbei wird die Maispflanze zugleich durch den Pflückspalt gezogen. Der Pflückspalt ist derart dimensioniert, dass zwar der Stängel durch diesen hindurch gezogen werden kann, die Kolben jedoch aufgrund ihrer Größe von dem Halmgutstengel getrennt und oberhalb der Pflückplatten verbleiben.

Ein Vorsatzgerät der vorstehenden Art ist beispielsweise aus der US 9 668 413 B2 bekannt. Die US 9 668 413 B2 offenbart weiterhin einen Spalteinstellmechanismus zum Bewegen der Pflückplatten. Der Spalteinstellmechanismus ermöglicht das Einstellen der Pflückplatten, sodass der Pflückspalt an verschiedene Kolbengrößen anpassbar ist.

Nachteilig an der US 9 668 413 B2 ist, dass die Pflückplatten parallel zueinander geführt sind, sodass der sich zwischen den Pflückplatten ausbildende Pflückspalt über dessen Länge eine konstante Breite aufweist. Hierdurch kann es zunehmend zu Ansammlungen von Verunreinigungen und Pflanzenresten an den Platten und im Spalt kommen. Derartige Verunreinigungen und Pflanzenreste können sich zwischen den Pflückplatten und dem Rahmen ansammeln, auf welchen die Pflückplatten geführt sind und den Spalteinstellmechanismus blockieren.

Die Schriften DE 10 2015 116375 A1 sowie US 5 680 750 A offenbaren Vorsatzgeräte zum Ernten von Halmfrüchten, insbesondere Mais, gemäß der Präambel des beigefügten Anspruchs 1.

Es ist deshalb Aufgabe der Erfindung, die beschriebenen Nachteile des Standes der Technik zu vermeiden und insbesondere die Pflückeinheiten eines Vorsatzgeräts derart zu verbessern, sodass Ansammlungen von Verunreinigungen und Pflanzenresten im Bereich der Pflückplatten reduziert werden.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Vorsatzgerät zum Ernten von Halmfrüchten, insbesondere Mais, vorgeschlagen, das über wenigstens eine Pflückeinheit verfügt wobei die Pflückeinheit zumindest einen Rahmen, einen Pflückspalt bildende erste und zweite Pflückplatte, die jeweils an dem Rahmen angebracht sind, einen Spalteinstellmechanismus zum Einstellen einer Größe des Pflückspalts, und paarweise unterhalb des Pflückspalts angeordnete Pflückwalzen umfasst, wobei der Spalteinstellmechanismus zum Einstellen eines Anstellwinkels zumindest einer der Pflückplatten vorgesehen und eingerichtet ist, wobei der Spalteinstellmechanismus eine erste Einstellanordnung aufweist, die ein sich im Wesentlichen parallel zu der ersten Pflückplatte erstreckendes erstes Stellelement, einen ersten Umlenkhebel und einen zweiten Umlenkhebel umfasst, wobei der erste und zweite Umlenkhebel jeweils das erste Stellelement mit der ersten Pflückplatte verbinden, wobei das erste Stellelement auf einer dem Pflückspalt abgewandten Seite seitlich neben dem Rahmen geführt ist.

Die Erfindung hat viele Vorteile. Die Einstellbarkeit des Anstellwinkels ermöglicht die Pflückplatten für sämtliche Spaltgrößen derart einzustellen, dass die Pflückplatten sich im Wesentlichen parallel zueinander erstrecken. Zusätzlich ist eine Spaltdivergenz einstellbar. Die Pflückplatten können derart ausgerichtet werden, sodass der Pflückspalt entgegen der Fahrtrichtung des Vorsatzgeräts zunehmend breiter wird. Hierdurch wird einer Ansammlung von Verunreinigungen und Pflanzenresten an den Platten und im Spalt entgegengewirkt.

Die beanspruchte erste Einstellanordnung hat zudem den Vorteil, dass ein besonders vorteilhafter Einstellmechanismus zum Einstellen einer Größe des Pflückspalts geschaffen wird. Die Führung des Stellelements auf einer dem Pflückspalt abgewandten Seite seitlich neben dem Rahmen ermöglicht einen flacheren Aufbau der Oberseite des Rahmens, sodass sich im Bereich der Pflückplatten ansammelnde Verunreinigungen oder Pflanzenrückstände seitlich von den Pflückeinheiten herunterrutschen können.

Eine weitere vorteilhafte Weiterbildung sieht vor, dass zum Einstellen des Anstellwinkels der ersten Pflückplatte das erste Stellelement in seiner Längserstreckung einstellbar ist. Hierdurch kann die Ausrichtung des ersten Umlenkhebels und des zweiten Umlenkhebels relativ zueinander eingestellt werden, indem eine Länge des Stellelements verändert wird. Eine veränderte Position des ersten und zweiten Umlenkhebels relativ zueinander bewirkt eine veränderte Ausrichtung der ersten Pflückplatte und somit eine Veränderung des Anstellwinkels der ersten Pflückplatte.

Eine weitere vorteilhafte Weiterbildung sieht vor, dass der Spalteinstellmechanismus eine zweite Einstellanordnung aufweist, die ein sich im Wesentlichen parallel zu der zweiten Pflückplatte erstreckendes zweites Stellelement, einen dritten Umlenkhebel und einen vierten Umlenkhebel umfasst, wobei der dritte und vierte Umlenkhebel jeweils das zweite Stellelement mit der zweiten Pflückplatte verbinden. Eine zweite Einstellanordnung ist besonders vorteilhaft, da so die Pflückplatten einer Pflückeinheit symmetrisch verstellt werden können und der Pflückspalt somit mittig über einen zwischen den Pflückwalzen befindlichen Spalt ausgerichtet werden kann.

Eine weitere vorteilhafte Weiterbildung sieht vor, dass zum Einstellen des Anstellwinkels der zweiten Pflückplatte das zweite Stellelement in seiner Längserstreckung einstellbar ist. Hierdurch kann die Ausrichtung des dritten Umlenkhebels und des vierten Umlenkhebels relativ zueinander eingestellt werden, indem eine Länge des zweiten Stellelements verändert wird. Eine veränderte Position des dritten und vierten Umlenkhebels relativ zueinander bewirkt eine veränderte Ausrichtung der zweiten Pflückplatte und somit eine Veränderung des Anstellwinkels der zweiten Pflückplatte.

Eine weitere vorteilhafte Weiterbildung sieht vor, dass das zweite Stellelement auf einer dem Pflückspalt abgewandten Seite seitlich neben dem Rahmen geführt ist.

Eine weitere vorteilhafte Weiterbildung sieht vor, dass die erste und zweite Pflückplatte auf Vorsprüngen beabstandet zu einer Hauptfläche des Rahmens geführt sind, wobei die Vorsprünge einteilig mit der Hauptfläche ausgebildet sind. Die verringerte Auflagefläche der Vorsprünge vermeidet ein Festsetzen der Pflückplatten am Rahmen bei längeren Standzeiten des Vorsatzgeräts. Weiterhin kann Wasser unter der Pflückplatten ablaufen. Die Vorsprünge können in den Rahmen geprägt sein, sodass diese einteilig mit den Rahmen ausgebildet sind. Hierdurch werden die Herstellkosten des Rahmens verringert.

Eine weitere vorteilhafte Weiterbildung sieht vor, dass die Hauptfläche auf einer dem Pflückspalt abgewandten Seite abschnittsweise abgekantet ist. Die Abkantung kann dazu führen, dass sich auf der Hauptfläche ansammelnde Verunreinigungen oder Erntegutreste seitlich von dem Rahmen herunterrutschen.

Eine weitere vorteilhafte Weiterbildung sieht vor, dass die Pflückeinheit am Ende des Pflückspalts ein Stützlager umfasst, wobei die erste Pflückplatte und die zweite Pflückplatte stirnseitig zur Aufnahme von in Längsrichtung der jeweiligen ersten und zweiten Pflückplatte wirkenden Kräften abgestützt sind.

Eine weitere vorteilhafte Weiterbildung sieht vor, dass der Spalteinstellmechanismus einen Steuerarm umfasst, der zum Bewegen der ersten und zweiten Einstellanordnung mit der ersten und zweiten Einstellanordnung verbunden ist. Die erste und zweite Einstellanordnung können somit mittels eines Steuerarms synchron eingestellt werden.

Eine weitere vorteilhafte Weiterbildung sieht vor, dass das Vorsatzgerät über mehrere Pflückeinheiten verfügt, wobei die Steuerarme mittels Verbindungselementen in kraftübertragender Weise miteinander verbunden sind, sodass ein einzelner Aktor zum Einstellen der Größe der Pflückspalte mehrerer Pflückeinheiten ausreicht.

Die vorliegende Erfindung wird nachstehend anhand eines in den Zeichnungen dargestellten Ausführungsbeispiels näher erläutert.
- Figur 1: eine schematische Seitenansicht eines Erntevorsatzes, montiert an einem Mähdrescher;
- Figur 2: eine schematische Detailvorderansicht einer Pflückeinheit mit einem Strohhäcksler;
- Figur 3: eine Pflückeinheit in einer Draufsicht.

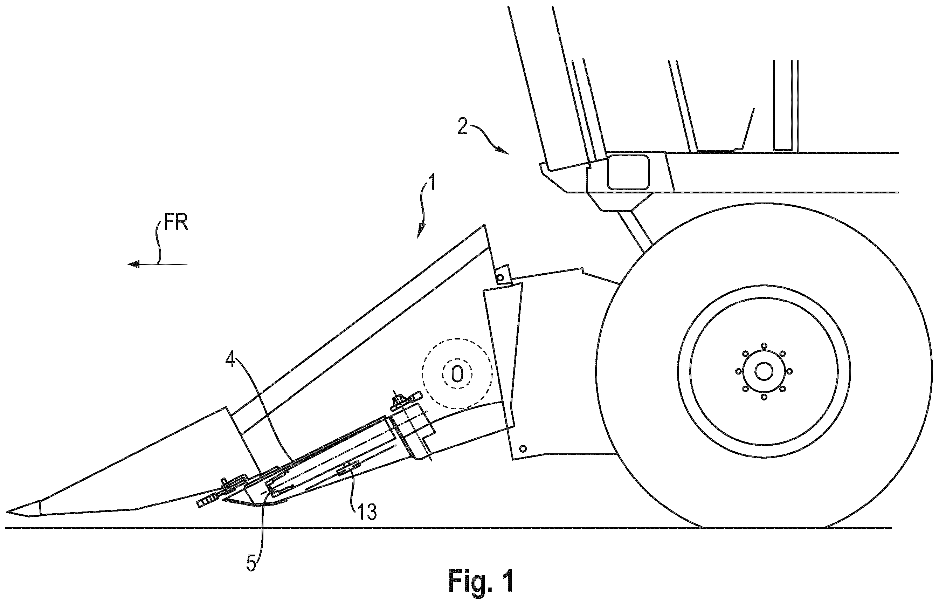

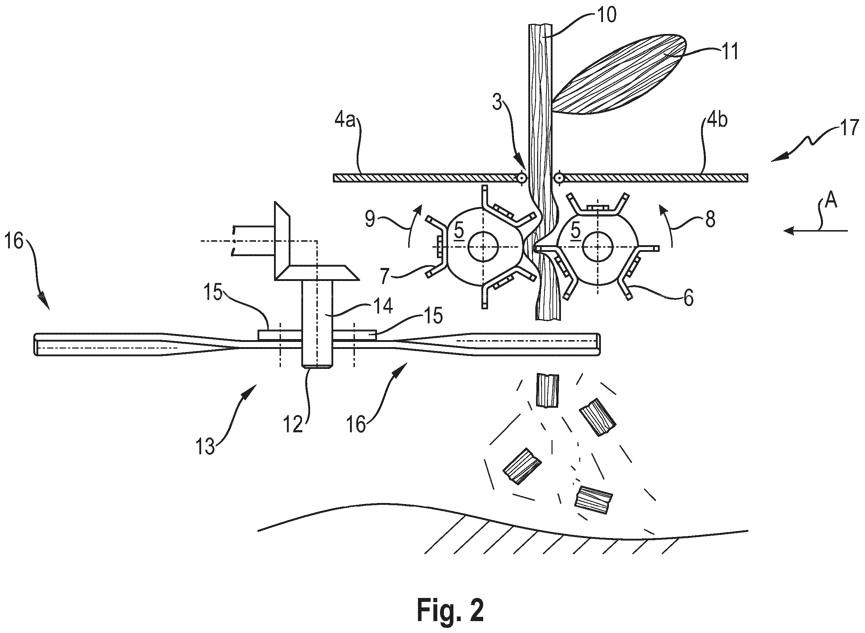

Fig. 1 zeigt schematisch ein erfindungsgemäßes Vorsatzgerät 1 zum Ernten von Halmfrüchten, das im rückwärtigen Bereich an einem nicht näher dargestellten Trägerfahrzeug 2, vorzugsweise einem Mähdrescher oder Häcksler adaptiert ist. Das Vorsatzgerät 1 verfügt in einem in Fahrtrichtung FR vorn liegenden Bereich über mehrere Pflückeinheiten 17 (siehe Fig. 2) mit jeweils einer einen Pflückspalt 3 zwischen sich ausbildenden ersten und zweiten Pflückplatte 4a, 4b, wobei den jeweiligen Pflückspalt 3 untenseitig paarweise angeordnet ein- oder mehrteilig ausgeführte zylindrische oder konische Pflückwalzen 5 zugeordnet sind, die an ihrem Umfang Profilsegmente 6, 7 aufweisen. Durch den gegenläufigen Antrieb der Pflückwalzen (Pfeilrichtung 8, 9) wird ein von den Profilsegmenten 6, 7 erfasster Halmgutstengel 10 in vertikaler Richtung nach unten eingezogen, wobei im Bereich des Pflückspalts 3 die Fruchtstände 11 abgestriffen werden. Dabei erfährt der Halmgutstengel 10 eine Verrottung fördernde Deformationen, bleibt aber in seiner stengeligen Form erhalten. Unterhalb der Pflückwalzen 5 ist jedem Pflückspalt 3 ein um eine vertikale Achse 12 umlaufender Stengelhäcksler 13 zugeordnet, dessen Abtriebswelle 14 Adaptierflansche 15 aufweist, die die Häckselmesser 16 lösbar aufnehmen.

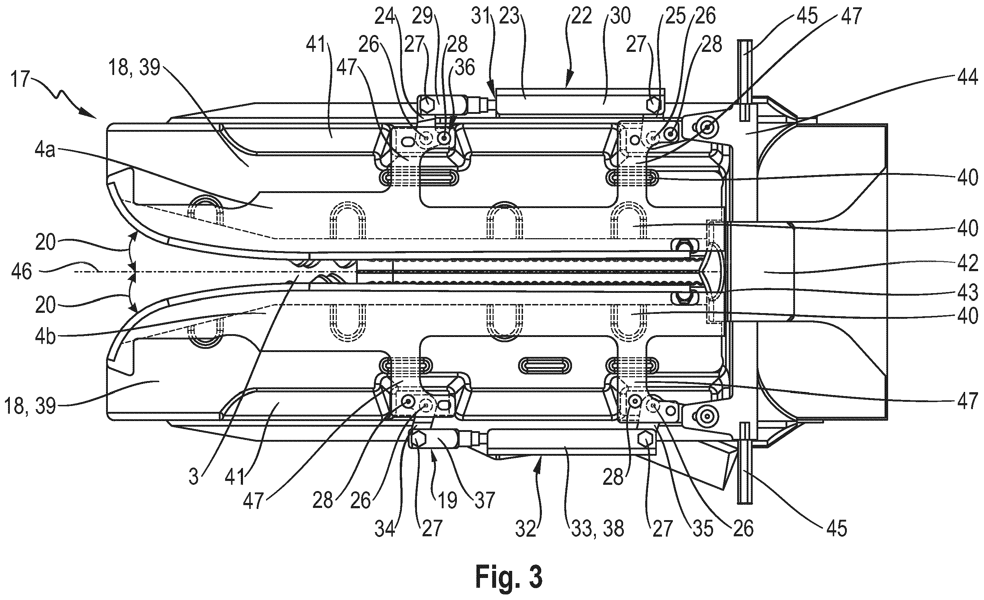

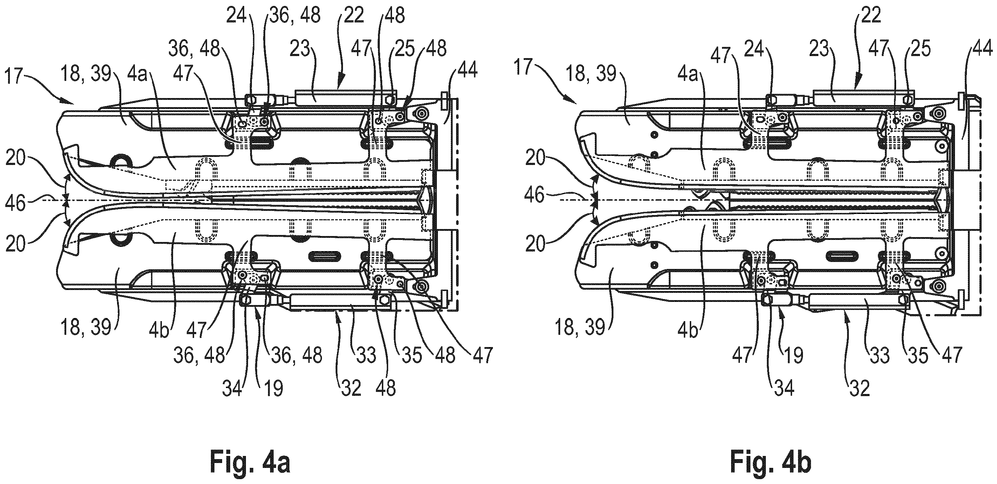

Fig. 3 zeigt eine Pflückeinheit 17 in einer Draufsicht. Die Pflückeinheit 17 umfasst einen Rahmen 18, wobei obenseitig auf dem Rahmen 18 die erste und zweite Pflückplatte 4a, 4b unter Ausbildung des zwischen den Pflückplatten 4a, 4b befindlichen Pflückspalts 3 angeordnet sind.

Zum Einstellen einer Größe des Pflückspalts 3 bzw. des Abstands der Pflückplatten 4a, 4b zueinander umfasst die Pflückeinheit 17 einen Spalteinstellmechanismus 19. Zum Verstellen der Größe des Pflückspalts 3 werden die Pflückplatten 4a, 4b aufeinander zu oder voneinander weg verschoben. Zusätzlich ist der Spalteinstellmechanismus 19 in noch näher zu erläuternder Weise zum Einstellen eines Anstellwinkels 20 der jeweiligen Pflückplatten 4a, 4b vorgesehen und eingerichtet. Als Anstellwinkel 20 ist der Winkel der jeweiligen Pflückplatte 4a, 4b relativ zu einer Mittellinie 46 des Pflückspalts 3 zu verstehen. Zum Einstellen des Anstellwinkels 20 ist die jeweilige Pflückplatte 4a, 4b mittels des Spalteinstellmechanismus 19 im Wesentlichen um eine sich in Hochrichtung erstreckende Achse 21 verschwenkbeweglich. Eine sich in Hochrichtung erstreckende Achse 21 ist exemplarisch für die erste Pflückplatte in Fig. 3 dargestellt.

Der Spalteinstellmechanismus 19 weist eine erste Einstellanordnung 22 auf, die ein sich im Wesentlichen parallel zu der ersten Pflückplatte 4a erstreckendes erstes Stellelement 23, einen ersten Umlenkhebel 24 und einen zweiten Umlenkhebel 25 umfasst, wobei der erste und zweite Umlenkhebel 24, 25 jeweils das erste Stellelement 23 mit der ersten Pflückplatte 4a verbinden. Der erste und zweite Umlenkhebel 24, 25 sind jeweils drehbeweglich um jeweils eine erste Achse 26 an dem Rahmen 18 angeordnet. Weiterhin sind der erste und zweite Umlenkhebel 24, 25 jeweils drehbeweglich um eine zur jeweiligen ersten Achse 26 beabstandete jeweilige zweite Achse 27 an den Enden des ersten Stellelements 23 angeordnet. Weiterhin sind der erste und zweite Umlenkhebel 24, 25 jeweils drehbeweglich um eine jeweilige zu den jeweiligen Achsen 26 und 27 beabstandete dritte Achse 28 an der Pflückplatte 4a angeordnet. Die Anordnung der ersten Einstellanordnung 22 bewirkt, dass eine Bewegung des ersten Stellelements 23 in Längsrichtung des ersten Stellelements zugleich eine Bewegung der ersten Pflückplatte 4a hin zu der zweiten Pflückplatten 4b oder weg von der zweiten Pflückplatte 4b bewirkt und die Größe des Pflückspalts 3 verändert wird.

Das erste Stellelement 23 ist als eine zweiteilige teleskopierbare Stellstange ausgeführt, sodass das erste Stellelement 23 in seiner Längserstreckung einstellbar ist. Hierfür ist ein erstes Teil 29 des ersten Stellelements 23 mit einer Schraubverbindung 31 mit einem zweiten Teil 30 des ersten Stellelements 23 verbunden. Die Schraubverbindung 31 ermöglicht ein Herausdrehen oder Hereindrehen des ersten Teils 29 in das zweite Teil 30. Eine Veränderung der Längserstreckung des ersten Stellelements 23 bewirkt eine veränderte Ausrichtung des ersten und zweiten Umlenkhebels 24, 25 zueinander und eine damit einhergehende Drehung der ersten Pflückplatte 4a um die sich in Hochrichtung erstreckende Achse 21. Mithin ist mittels des in seiner Längserstreckung veränderbaren ersten Stellelements 23 der Anstellwinkel 20 der ersten Pflückplatte 4a einstellbar. Die dritte Achse 28 eines Umlenkhebels 24, 25, hier und vorzugsweise des ersten Umlenkhebels 24, ist in einem Langloch 36 an der ersten Pflückplatte 4a geführt, um eine einstellbare Ausrichtung der Umlenkhebel 24, 25 relativ zueinander zu ermöglichen.

Hier ist das erste Stellelement 23 auf einer dem Pflückspalt 3 abgewandten Seite seitlich neben dem Rahmen 18 angeordnet.

Weiterhin umfasst der Spalteinstellmechanismus 19 eine zweite Einstellanordnung 32, die ein sich im Wesentlichen parallel zu der zweiten Pflückplatte 4b erstreckendes zweites Stellelement 33, einen dritten Umlenkhebel 34 und einen vierten Umlenkhebel 35 umfasst, wobei der dritte und vierte Umlenkhebel 34, 35 jeweils das zweite Stellelement 33 mit der zweiten Pflückplatte 4b verbinden. Die Umlenkhebel 34, 35 der zweiten Einstellanordnung 32 sind gleichermaßen wie die Umlenkhebel 24, 25 der ersten Einstellanordnung 32 jeweils mittels erster, zweiter und dritter Achsen 26, 27, 28 mit der zweiten Pflückplatte 4b und dem zweiten Stellelement 33 verbunden. Das zweite Stellelement 33 der zweiten Einstellanordnung 32 ist gleichermaßen wie das erste Stellelement 23 zweiteilig mit einem ersten Teil 37 und zweiten Teil 38 in seiner Längserstreckung einstellbar ausgebildet. Mithin ermöglicht die zweite Einstellanordnung 32 ebenfalls die Größe des Pflückspalts 3 einzustellen und den Anstellwinkel 22 der zweiten Pflückplatte 4b zu verändern.

Hier und vorzugsweise ist das zweite Stellelement 33 auf einer dem Pflückspalt 3 abgewandten Seite seitlich neben dem Rahmen 18 angeordnet.

Hier und vorzugsweise sind die erste und zweite Pflückplatte 4a, 4b auf Vorsprüngen 40 beabstandet zu einer Hauptfläche 39 des Rahmens 18 geführt, wobei die Vorsprünge 40 einteilig mit der Hauptfläche 39 ausgebildet sind. Weiterhin ist die Hauptfläche 39 auf einer dem Pflückspalt 3 abgewandten Seite abschnittsweise abgekantet. Die Abkantung 41 führt dazu, dass sich auf der Hauptfläche 39 ansammelnde Verunreinigungen oder Erntegutreste seitlich von dem Rahmen 18 herunterrutschen.

Zur Abstützung der Pflückplatten 4a, 4b ist am Ende des Pflückspalts 3 ein Stützlager 42 angeordnet. Die erste und zweite Pflückplatte 4a, 4b sind jeweils stirnseitig zur Aufnahme von in Längsrichtung der jeweiligen ersten und zweiten Pflückplatte 4a, 4b wirkenden Kräften an dem Stützlager 42 abgestützt. Hierfür umfasst das Stützlager 42 eine sich abschnittsweise entlang der jeweiligen Stirnseite der jeweiligen Pflückplatte 4a, 4b erstreckende Gleitfläche 43.

Weiterhin umfasst der Spalteinstellmechanismus 19 einen Steuerarm 44, der zum Bewegen der ersten und zweiten Einstellanordnung 22, 32 mit der ersten und zweiten Einstellanordnung 22, 32 verbunden ist. Der Steuerarm 44 erstreckt sich quer zu dem Pflückspalt 3 und ist endseitig jeweils mit einem Umlenkhebel 25, 35 der jeweiligen Einstellanordnung 22, 32 drehbeweglich verbunden, sodass eine Bewegung des Steuerarms 44 in dessen Längsrichtung eine Schwenkbewegung des jeweils mit dem Steuerarm 44 verbundenen Umlenkhebels 25, 35 bewirkt. Diese Schwenkbewegung wird zum einen von den Umlenkhebeln 25, 34 jeweils direkt auf die jeweilige Pflückplatte 4a, 4b übertragen und zum anderen über das jeweilige Stellelemente 23, 33 auf die jeweiligen Umlenkhebel 24, 34 und von diesen wiederum auf die jeweilige Pflückplatte 4a, 4b übertragen. Hier und vorzugsweise verfügt das Vorsatzgerät 1 über mehrere Pflückeinheiten 17, wobei die Steuerarme 44 der Pflückeinheiten 17 mittels Verbindungselementen 45 in kraftübertragender Weise miteinander verbunden sind, sodass ein hier nicht näher dargestellter Aktor zum Einstellen der Größe der Pflückspalte 3 mehrerer Pflückeinheiten 17 ausreicht.

### Bezugszeichenliste:

| | | | |
|---|---|---|---|
| 1 | Vorsatzgerät | 33 | Zweite Stellelement |
| 2 | Trägerfahrzeug | 34 | Dritter Umlenkhebel |
| 3 | Pflückspalt | 35 | Vierter Umlenkhebel |
| 4a | Erste Pflückplatte | 36 | Langloch |
| 4b | Zweite Pflückplatte | 37 | Erstes Teil |
| 5 | Pflückwalze | 38 | Zweites Teil |
| 6 | Profilsegment | 39 | Hauptfläche |
| 7 | Profilsegment | 40 | Vorsprung |
| 8 | Pfeilrichtung | 41 | Abkantung |
| 9 | Pfeilrichtung | 42 | Stützlager |
| 10 | Halmgutstengel | 43 | Gleitfläche |
| 11 | Fruchtstände | 44 | Steuerarm |
| 12 | Vertikale Achse | 45 | Verbindungselement |
| 13 | Stengelhäcksler | 46 | Mittellinie |
| 14 | Abtriebswelle | | |
| 15 | Adaptierflansche | | |
| 16 | Häckselmesser | | |
| 17 | Pflückeinheit | | |
| 18 | Rahmen | | |
| 19 | Spalteinstellmechanismus | | |
| 20 | Anstellwinkel | | |
| 21 | Achse | | |
| 22 | Erste Einstellanordnung | | |
| 23 | Erste Stellelement | | |
| 24 | Erster Umlenkhebel | | |
| 25 | Zweiter Umlenkhebel | | |
| 26 | Achse | | |
| 27 | Achse | | |
| 28 | Achse | | |
| 29 | Erstes Teil | | |
| 30 | Zweites Teil | | |
| 31 | Schraubverbindung | | |
| 32 | Zweite Einstellanordnung | | |

## Patentansprüche

1. Vorsatzgerät (1) zum Ernten von Halmfrüchten, insbesondere Mais, das über wenigstens eine Pflückeinheit (17) verfügt, die Pflückeinheit (17) zumindest umfassend
- einen Rahmen (18),
- einen Pflückspalt (3) bildende erste und zweite Pflückplatte (4a, 4b), die jeweils an dem Rahmen (18) angebracht sind,
- einen Spalteinstellmechanismus (19) zum Einstellen einer Größe des Pflückspalts (3),
- paarweise unterhalb des Pflückspalts (3) angeordnete Pflückwalzen (5), wobei der Spalteinstellmechanismus (19) zum Einstellen eines Anstellwinkels (20) zumindest einer der Pflückplatten (4a, 4b) vorgesehen und eingerichtet ist, wobei der Spalteinstellmechanismus (19) eine erste Einstellanordnung (22) aufweist, die ein sich im Wesentlichen parallel zu der ersten Pflückplatte (4a) erstreckendes erstes Stellelement (23), einen ersten Umlenkhebel (24) und einen zweiten Umlenkhebel (25) umfasst, wobei der erste und zweite Umlenkhebel (24, 25) jeweils das erste Stellelement (23) mit der ersten Pflückplatte (4a) verbinden,
**dadurch gekennzeichnet, dass** das erste Stellelement (23) auf einer dem Pflückspalt (3) abgewandten Seite seitlich neben dem Rahmen (18) geführt ist.

2. Vorsatzgerät (1) nach Anspruch 1, **dadurch gekennzeichnet, dass** zum Einstellen des Anstellwinkels (20) der ersten Pflückplatte (4a) das erste Stellelement (23) in seiner Längserstreckung einstellbar ist.

3. Vorsatzgerät (1) nach einem der vorherigen Ansprüche, **dadurch gekennzeichnet, dass** der Spalteinstellmechanismus (19) eine zweite Einstellanordnung (32) aufweist, die ein sich im Wesentlichen parallel zu der zweiten Pflückplatte (4b) erstreckendes zweites Stellelement (33), einen dritten Umlenkhebel (34) und einen vierten Umlenkhebel (35) umfasst, wobei der dritte und vierte Umlenkhebel (34, 35) jeweils das zweite Stellelement (33) mit der zweiten Pflückplatte (4b) verbinden.

4. Vorsatzgerät (1) nach Anspruch 3, **dadurch gekennzeichnet, dass** zum Einstellen des Anstellwinkels (20) der zweiten Pflückplatte (4b) das zweite Stellelement (33) in seiner Längserstreckung einstellbar ist.

5. Vorsatzgerät (1) nach einem der Ansprüche 3 oder 4, **dadurch gekennzeichnet, dass** das zweite Stellelement (33) auf einer dem Pflückspalt (3) abgewandten Seite seitlich neben dem Rahmen (18) geführt ist.

6. Vorsatzgerät (1) nach einem der vorherigen Ansprüche, **dadurch gekennzeichnet, dass** die erste und zweite Pflückplatte (4a, 4b) auf Vorsprüngen (40) beabstandet zu einer Hauptfläche (39) des Rahmens (18) geführt sind, wobei die Vorsprünge (40) einteilig mit der Hauptfläche (39) ausgebildet sind.

7. Vorsatzgerät (1) nach Anspruch 6, **dadurch gekennzeichnet, dass** die Hauptfläche (39) auf einer dem Pflückspalt (3) abgewandten Seite abschnittsweise abgekantet ist.

8. Vorsatzgerät (1) nach einem der vorherigen Ansprüche, **dadurch gekennzeichnet, dass** die Pflückeinheit (17) am Ende des Pflückspalts (3) ein Stützlager (42) umfasst, wobei die erste Pflückplatte (4a) und die zweite Pflückplatte (4b) stirnseitig zur Aufnahme von in Längsrichtung der jeweiligen ersten und zweiten Pflückplatte (4a, 4b) wirkenden Kräften abgestützt sind.

9. Vorsatzgerät (1) nach einem den Ansprüchen 1 und 3, **dadurch gekennzeichnet, dass** der Spalteinstellmechanismus (19) einen Steuerarm (44) umfasst, der zum Bewegen der ersten und zweiten Einstellanordnung (22, 32) mit der ersten und zweiten Einstellanordnung (22, 32) verbunden ist.

10. Vorsatzgerät (1) nach Anspruch 9, **dadurch gekennzeichnet, dass** das Vorsatzgerät (1) über mehrere Pflückeinheiten (17) verfügt, wobei die Steuerarme (44) mittels Verbindungselementen (45) in kraftübertragender Weise miteinander verbunden sind.

## Claims

1. A front attachment (1) for harvesting cereal crops, in particular maize, which is provided with at least one picking unit (17) the picking unit (17) comprising at least:
- a frame (18),
- a first and second picking plate (4a, 4b) forming a picking gap (3), which are respectively attached to the frame (18),
- a gap adjustment mechanism (19) for the adjustment of a size of the picking gap (3),
- picking rollers (5) disposed in pairs below the picking gap (3), wherein the gap adjustment mechanism (19) is provided and configured for the adjustment of an angle of attack (20) of at least one of the picking plates (4a, 4b), wherein the gap adjustment mechanism (19) has a first adjustment assembly (22) which comprises a first positioning element (23) extending substantially parallel to the first picking plate (4a), a first deflecting lever (24) and a second deflecting lever (25), wherein the first and second deflecting levers (24, 25) respectively connect the first positioning element (23) to the first picking plate (4a),
**characterized in that** the first positioning element (23) is guided laterally next to the frame (18) on a side which faces away from the picking gap (3).

2. The front attachment (1) according to claim 1, **characterized in that**, in order to adjust the angle of attack (20) of the first picking plate (4a), the longitudinal extent of the first positioning element (23) can be adjusted.

3. The front attachment (1) according to one of the preceding claims, **characterized in that** the gap adjustment mechanism (19) has a second adjustment assembly (32) which comprises a second positioning element (33) extending substantially parallel to the second picking plate (4b), a third deflecting lever (34) and a fourth deflecting lever (35), wherein the third and fourth deflecting levers (34, 35) respectively connect the second positioning element (33) to the second picking plate (4b).

4. The front attachment (1) according to claim 3, **characterized in that**, in order to adjust the angle of attack (20) of the second picking plate (4b), the longitudinal extent of the second positioning element (33) can be adjusted.

5. The front attachment (1) according to one of claims 3 or 4, **characterized in that** the second positioning element (33) is guided laterally next to the frame (18) on a side which faces away from the picking gap (3).

6. The front attachment (1) according to one of the preceding claims, **characterized in that** the first and second picking plates (4a, 4b) are spaced apart from a main surface (39) of the frame (18), guided on projections (40), wherein the projections (40) are integrally formed with the main surface (39).

7. The front attachment (1) according to claim 6, **characterized in that** the main surface (39) is chamfered in sections on a side facing away from the picking gap (3).

8. The front attachment (1) according to one of the preceding claims, **characterized in that** the picking unit (17) comprises a support bearing (42) at the end of the picking gap (3), wherein the first picking plate (4a) and the second picking plate (4b) are supported at their ends in order to take up forces acting in the longitudinal direction of the respective first and second picking plate (4a, 4b).

9. The front attachment (1) according to one of claims 1 and 3, **characterized in that** the gap adjustment mechanism (19) comprises a control arm (44) which is connected to the first and second adjustment assembly (22, 32) in order to move the first and second adjustment assembly (22, 32).

10. The front attachment (1) according to claim 9, **characterized in that** the front attachment (1) is provided with a plurality of picking units (17), wherein the control arms (44) are connected to each other in a force-transmitting manner by means of connecting elements (45).

## Revendications

1. Appareil frontal (1) destiné à la récolte de céréales sur tiges, en particulier de maïs, qui dispose d'au moins une unité de cueillage (17), ladite unité de cueillage (17) comprenant au moins :
- un bâti (18),
- une première et une deuxième plaque de cueillage (4a, 4b) qui forment un canal de cueillage (3) et sont montées respectivement sur le bâti (18),
- un mécanisme de réglage de canal (19) destiné au réglage d'une taille du canal de cueillage (3),
- des rouleaux de cueillage (5) disposés par paires sous le canal de cueillage (3),
le mécanisme de réglage de canal (19) étant prévu et agencé pour le réglage d'un angle d'inclinaison (20) d'au moins une des plaques de cueillage (4a, 4b), le mécanisme de réglage de canal (19) présentant un premier ensemble de réglage (22) qui comporte un premier élément de manœuvre (23) s'étendant de manière sensiblement parallèle à la première plaque de cueillage (4a), un premier levier de renvoi (24) et un deuxième levier de renvoi (25), le premier et le deuxième levier de renvoi (24, 25) reliant respectivement le premier élément de manœuvre (23) à la première plaque de cueillage (4a),
**caractérisé en ce que** le premier élément de manœuvre (23) est guidé sur un côté éloigné du canal de cueillage (3), latéralement à côté du bâti (18).

2. Appareil frontal (1) selon la revendication 1, **caractérisé en ce que** pour le réglage de l'angle d'inclinaison (20) de la première plaque de cueillage (4a), le premier élément de manœuvre (23) peut être réglé dans la dimension de sa longueur.

3. Appareil frontal (1) selon une des revendications précédentes, **caractérisé en ce que** le mécanisme de réglage de canal (19) présente un deuxième ensemble de réglage (32) qui comporte un deuxième élément de manœuvre (33) s'étendant de manière sensiblement parallèle à la deuxième plaque de cueillage (4b), un troisième levier de renvoi (34) et un quatrième levier de renvoi (35), le troisième et le quatrième levier de renvoi (34, 35) reliant respectivement le deuxième élément de manœuvre (33) à la deuxième plaque de cueillage (4b).

4. Appareil frontal (1) selon la revendication 3, **caractérisé en ce que** pour le réglage de l'angle d'inclinaison (20) de la deuxième plaque de cueillage (4b), le deuxième élément de manœuvre (33) peut être réglé dans la dimension de sa longueur.

5. Appareil frontal (1) selon une des revendications 3 ou 4, **caractérisé en ce que** le deuxième élément de manœuvre (33) est guidé sur un côté éloigné du canal de cueillage (3), latéralement à côté du bâti (18).

6. Appareil frontal (1) selon une des revendications précédentes, **caractérisé en ce que** la première et la deuxième plaque de cueillage (4a, 4b) sont guidées sur des saillies (40), à distance d'une surface principale (39) du bâti (18), les saillies (40) étant réalisées d'une seule pièce avec la surface principale (39).

7. Appareil frontal (1) selon la revendication 6, **caractérisé en ce que** la surface principale (39) est chanfreinée dans certaines portions sur un côté éloigné du canal de cueillage (3).

8. Appareil frontal (1) selon une des revendications précédentes, **caractérisé en ce que** l'unité de cueillage (17) comprend un moyen de support (42) à l'extrémité du canal de cueillage (3), la première plaque de cueillage (4a) et la deuxième plaque de cueillage (4b) étant supportées côté frontal pour absorber des forces agissant dans le sens longitudinal respectivement de la première et de la deuxième plaque de cueillage (4a, 4b).

9. Appareil frontal (1) selon une des revendications 1 et 3, **caractérisé en ce que** le mécanisme de réglage de canal (19) comprend un bras de commande (44) qui est relié au premier et au deuxième ensemble de réglage (22, 32) en vue du déplacement du premier et du deuxième ensemble de réglage (22, 32).

10. Appareil frontal (1) selon la revendication 9, **caractérisé en ce que** l'appareil frontal (1) dispose de plusieurs unités de cueillage (17), les bras de commande (44) étant reliés entre eux au moyen d'éléments de liaison (45), de façon à transmettre des forces.
